# EUROPEAN PATENT APPLICATION

(11) **EP 4 545 219 A1**
(43) Date of publication of application: **30.04.2025**
(21) Application number: 24202733.2
(22) Date of filing: 26.09.2024
(51) Int. Cl.: B22F 10/28, B22F 10/31, B22F 10/38, B22F 10/85, B29C 64/153, B33Y 10/00, B33Y 50/02, F23R 3/00, F24B 1/06, G01B 13/02, G01B 13/10, G01B 13/20

(54) **METHOD OF OPERATING A LASER ADDITIVE MANUFACTURING MACHINE**

(30) Priority: 25.10.2023 GB 202316312
(71) Applicant: Rolls-Royce plc, London N1 9FX (GB)
(72) Inventor: Stapleton, David, Derby, DE24 8BJ (GB); Mellor, Richard, Derby, DE24 8BJ (GB); O'Brien, Stuart, Derby, DE24 8BJ (GB)
(74) Representative: Rolls-Royce plc

(57) **Abstract**

A method (1300) of operating a laser additive manufacturing machine (300) includes manufacturing at least one first fluid-flow coupon (510), that includes a plate (512) defining a plurality of holes (514), at a corresponding beam offset value (Oa, Ob,..., On) of the laser additive manufacturing machine (300). The method (1300) further includes disposing the at least one first fluid-flow coupon (510) in a testing rig (502), directing a fluid flow (F1) towards the at least one first fluid-flow coupon (510), measuring a fluid flow rate (FR1) through the at least one first fluid-flow coupon (510), determining a calibration curve (C1) by correlating a beam offset of the laser additive manufacturing machine (300) with a flow parameter based on the fluid flow rate (FR1) through the at least one first fluid-flow coupon (510) and the corresponding beam offset value (Oa, Ob,..., On), determining a target beam offset value (O1) corresponding to a target flow value (V1) of the flow parameter, and calibrating and operating the laser additive manufacturing machine (300) using the target beam offset value (O1).

## Description

### FIELD

The present invention relates to a method of operating a laser additive manufacturing machine.

### BACKGROUND

Generally, gas turbine engines include a variety of parts that have a complex geometry. In some cases, some parts of the gas turbine engine may have features, such as cooling holes, that are required to meet tight specifications in terms of tolerances and/or air flow requirements. It has been observed that manufacturing variations and surface roughness may cause non-compliance with such specifications. A range of methods may be used on a part-by-part basis and/or machine-by-machine basis to solve the challenges related to non-compliance through file manipulation. However, such methods may be time consuming and difficult to industrialise.

In some cases, the parts may be manufactured using a laser additive manufacturing process, such as a laser powder bed fusion process. When the parts are manufactured using the laser additive manufacturing process, a machine specific tuning parameter called "beam offset" is considered, that offsets a path of a laser into the part to take into account the effects of a laser beam width. Currently this parameter is determined via measurement of macro scale physical artefacts manufactured on the laser additive manufacturing machine, which may be time consuming and may be prone to errors.

Further, it may be desired to determine size of features, such as cooling holes, in the parts to obtain desired specifications, such as, air flow requirements. Conventionally, a part model is received from design and manufacturing that is required to meet the desired specifications often through ad-hoc solutions. Such an approach may result in complex file/parameter assignments on part-by-part basis and may be time consuming.

Furthermore, the laser additive manufacturing machine may be used to manufacture a plurality of similar parts. Differences in machine conditions or process control during manufacturing of the parts may have an impact on a repeatability of the manufactured parts. In some cases, the manufactured parts may not perform as desired or the manufactured parts may not adhere to desired specifications. Thus, it may be desirable to ensure that the machine conditions or process control are appropriate to meet the desired specification and ensure repeatability in the manufactured parts.

### SUMMARY

In a first aspect, there is provided a method of operating a laser additive manufacturing machine. The method includes manufacturing, via the laser additive manufacturing machine, at least one first fluid-flow coupon at a corresponding beam offset value of the laser additive manufacturing machine. The at least one first fluid-flow coupon includes a plate defining a plurality of holes extending therethrough. The method further includes disposing the at least one first fluid-flow coupon in a testing rig. The method further includes directing a fluid flow towards the at least one first fluid-flow coupon. The method further includes measuring a fluid flow rate of the fluid flow through the at least one first fluid-flow coupon. The method further includes determining a calibration curve by correlating a beam offset of the laser additive manufacturing machine with a flow parameter based on the fluid flow rate through the at least one first fluid-flow coupon and the corresponding beam offset value. The method further includes determining, via the calibration curve, a target beam offset value corresponding to a target flow value of the flow parameter. The method further includes calibrating and operating the laser additive manufacturing machine using the target beam offset value.

The method of the present invention may provide a cost-effective and time-effective approach to manufacture complex parts using the laser additive manufacturing machine. Components manufactured using the method described herein may exhibit improved repeatability over time between same or different laser additive manufacturing machines. The method ensures that a direct calibration of air flow output can take place, resulting in the ability to obtain the same air flow performance between different laser additive manufacturing machines or between different components manufactured on the same laser additive manufacturing machine, which may have different characteristics. Further, the method may also ensure that components manufactured using the method mentioned above may maintain air flow compliance through re-calibration on changing the conditions of the laser additive manufacturing machine.

In some embodiments, disposing the at least one first fluid-flow coupon in the testing rig further includes angularly placing the at least one first fluid-flow coupon on a test plane such that the plurality of holes of the at least one first fluid-flow coupon extends parallel to a normal to the test plane. In other words, the plurality of holes extend obliquely relative to the plate of the first fluid-flow coupon.

In some embodiments, the flow parameter is an effective flow area per hole of the at least one first fluid-flow coupon. Thus, the calibration curve correlates the beam offset of the laser additive manufacturing machine with the effective flow area per hole of the at least one first fluid-flow coupon to determine the target beam offset value.

In some embodiments, the method further includes receiving a fluid flow requirement of a component. The method further includes manufacturing, via the laser additive manufacturing machine, a plurality of second fluid-flow coupons at a same machine setting of the laser additive manufacturing machine. Each second fluid-flow coupon includes a plate defining a plurality of holes extending therethrough and having a hole size. The hole sizes of the plurality of second fluid-flow coupons are different from each other. Each second fluid-flow coupon is representative of the component. The method further includes disposing each second fluid-flow coupon in the testing rig. The method further includes directing a fluid flow towards each second fluid-flow coupon. The method further includes measuring a fluid flow rate of the fluid flow through each second fluid-flow coupon. The method further includes comparing the fluid flow rate of each second fluid-flow coupon with the fluid flow requirement of the component. The method further includes selecting one second fluid-flow coupon from the plurality of second fluid-flow coupons that has the fluid flow rate closest to the fluid flow requirement of the component. The method further includes determining the hole size of the one second fluid-flow coupon as a target hole size of the component.

In some cases, the component may include one or more features, such as cooling holes, that may be arranged in a variety of orientations. By using a range of the second fluid-flow coupons disposed in different angular orientations, the optimal target hole size for the cooling hole that meets the desired air flow requirements may be determined. The method of determining the target hole size as mentioned herein may be cost-effective and time-effective. Further, the method may allow manufacturing of multiple parts with the desired air flow requirements.

In some embodiments, the method further includes manufacturing, via the laser additive manufacturing machine, the component using the target hole size at the same machine setting. The components manufactured by the method may have one or more cooling holes having the optimal target hole size to meet the desired air flow requirements.

In some embodiments, the method further includes receiving a fluid flow requirement of a component. The method further includes manufacturing, via the laser additive manufacturing machine, a plurality of trial components at a same machine setting of the laser additive manufacturing machine. Each trial component includes a plate defining a plurality of trial flow features extending therethrough and having a feature size. The feature sizes of the plurality of trial components are different from each other. A shape of each trial component is same as a shape of the component. The method further includes disposing each trial component in the testing rig. The method further includes directing a fluid flow towards each trial component. The method further includes measuring a fluid flow rate of the fluid flow through each trial component. The method further includes comparing the fluid flow rate of each trial component with the fluid flow requirement of the component. The method further includes selecting one trial component from the plurality of trial components that has the fluid flow rate closest to the fluid flow requirement of the component. The method further includes determining the feature size of the one trial component as a target hole size of the component.

In some cases, the component may include one or more features, such as cooling holes, that may be arranged in a variety of orientations. By using a range of the trial components disposed in different angular orientations, the optimal target hole size for the cooling hole that meets the desired air flow requirements can be established. The method of determining the target hole size as mentioned herein be time-effective. Further, the method may allow manufacturing of multiple parts with the desired air flow requirements.

In some embodiments, the method further includes manufacturing, via the laser additive manufacturing machine, the component using the target hole size at the same machine setting. The components manufactured by the method may have one or more cooling holes having the optimal target hole size to meet the desired air flow requirements.

In some embodiments, the method further includes manufacturing, via the laser additive manufacturing machine, a plurality of third fluid-flow coupons at a same machine setting of the laser additive manufacturing machine. Each third fluid-flow coupon includes a plate defining a plurality of holes extending therethrough and having a hole size. The hole sizes of the plurality of third fluid-flow coupons are equal to each other. The method further includes disposing each third fluid-flow coupon in the testing rig. The method further includes directing a fluid flow towards each third fluid-flow coupon. The method further includes measuring a fluid flow rate through of the fluid flow each third fluid-flow coupon. The method further includes monitoring a health of the laser additive manufacturing machine based on a variation of the fluid flow rates through the plurality of third fluid-flow coupons.

Specifically, if the fluid flow rates through the third fluid-flow coupons are consistent with each other or lie within a predetermined threshold range, it may be determined that the laser additive manufacturing machine is performing as expected. Thus, it may be concluded that components manufactured on the laser additive manufacturing machine may have consistent air flow rates and may exhibit optimum performance. However, if the fluid flow rates through the third fluid-flow coupons are different from each other or lie outside of the predetermined threshold range, it may be determined that the laser additive manufacturing machine is not performing as expected. Accordingly, it may be concluded that components manufactured on the laser additive manufacturing machine may have inconsistent air flow rates and may exhibit non-optimal performance.

The laser additive manufacturing machine may be used to manufacture a plurality of similar parts. Differences in machine conditions or process control during manufacturing of the parts may have an impact on the manufactured parts. In some cases, the manufactured parts may not perform as desired or the manufactured parts may not adhere to desired specifications. Thus, the method of monitoring the health of the laser additive manufacturing machine may ensure that the manufactured parts meet the desired specification.

In some embodiments, the laser additive manufacturing machine is a laser powder bed fusion machine. The laser powder bed fusion machine may enable manufacturing of complex parts, e.g., gas turbine engine components to meet desired design tolerances and air flow requirements.

### BRIEF DESCRIPTION OF THE DRAWINGS

Embodiments are now described by way of example only, with reference to the Figures, in which:
**FIG. 1** is a schematic side view of a gas turbine engine;
**FIG. 2** is a schematic perspective view of a component of the gas turbine engine of FIG. 1;
**FIG. 3** is a schematic view illustrating a laser additive manufacturing machine for manufacturing the component of FIG. 2;
**FIG. 4** is a schematic top view of a component illustrating the concept of beam offset for the laser additive manufacturing machine of FIG. 3;
**FIG. 5** is a schematic side view of a system including a testing rig and a first fluid-flow coupon disposed in the testing rig;
**FIG. 6** is a schematic perspective view of a first fluid-flow coupon;
**FIG. 7** is a plot for determining a beam offset value;
**FIG. 8** is a schematic side view of the testing rig and a second fluid-flow coupon disposed in the testing rig of the system of FIG. 5;
**FIG. 9** is a schematic side view of the testing rig and a trial component disposed in the testing rig of the system of FIG. 5;
**FIG. 10** is a schematic perspective view of the trial component of FIG. 9;
**FIG. 11** is a schematic side view of the testing rig and a third fluid-flow coupon disposed in the testing rig of the system of FIG. 5;
**FIG. 12** is a plot depicting an impact of machine settings and health of the laser additive manufacturing machine on fluid flow rates through the first fluid-flow coupons of FIG. 5; and
**FIG. 13** is a flowchart for a method of operating the laser additive manufacturing machine of FIG. 3.

### DETAILED DESCRIPTION

Aspects and embodiments of the present invention will now be discussed with reference to the accompanying figures. Further aspects and embodiments will be apparent to those skilled in the art.

As used herein, the term "configured to" and like is at least as restrictive as the term "adapted to" and requires actual design intention to perform the specified function rather than mere physical capability of performing such a function.

As used herein, the terms "first", "second", and "third" are used as identifiers. Therefore, such terms should not be construed as limiting of this disclosure. The terms "first", "second" and "third", when used in conjunction with a feature or an element can be interchanged throughout the embodiments of this disclosure.

As used herein, "at least one of A and B" should be understood to mean "only A, only B, or both A and B".

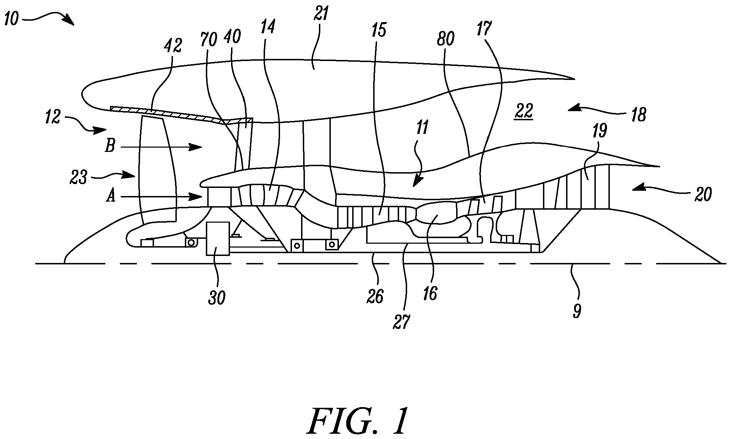

FIG. 1 illustrates a schematic side view of a gas turbine engine 10 having a principal rotational axis 9. The gas turbine engine 10 comprises an air intake 12 and a propulsive fan 23 that generates two air flows: a core air flow A and a bypass air flow B. The gas turbine engine 10 comprises an engine core 11 that receives the core air flow A. In other words, the core air flow A enters the engine core 11. The fan 23 is located upstream of the engine core 11. Upon rotating, the fan 23 generates the core air flow A and the bypass air flow B. The engine core 11 comprises, in axial flow series, a compressor, a combustor, and a turbine. Specifically, the engine core 11 comprises, in axial flow series, a low pressure compressor 14, a high pressure compressor 15, a combustor 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass air flow B flows through the bypass duct 22 surrounding the engine core 11. The bypass air flow B flows through the bypass duct 22 to provide propulsive thrust, where it is straightened by a row of outer guide vanes 40 before exiting the bypass exhaust nozzle 18. The outer guide vanes 40 extend radially outwardly from an inner ring 70 which defines a radially inner surface of the bypass duct 22. Rearward of the outer guide vanes 40, the engine core 11 is surrounded by an inner cowl 80 which provides an aerodynamic fairing defining an inner surface of the bypass duct 22. The inner cowl 80 is rearwards of and axially spaced from the inner ring 70. A fan case 42 defines an outer surface of the bypass duct 22. The inner ring 70 defines the inner surface of the bypass duct 22 towards the rear of the fan case 42. The fan 23 is attached to and driven by the low pressure turbine 19 via a shaft 26 and an epicyclic gearbox 30.

In use, the core air flow A is accelerated and compressed by the low pressure compressor 14 and directed into the high pressure compressor 15 where further compression takes place. The compressed air exhausted from the high pressure compressor 15 is directed into the combustor 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. A core shaft 27 connects the turbine 17, 19 to the compressor 14, 15. Specifically, the high pressure turbine 17 drives the high pressure compressor 15 by the suitable core shaft 27 or an interconnecting shaft. The fan 23 generally provides the majority of the propulsive thrust. The epicyclic gearbox 30 is a reduction gearbox.

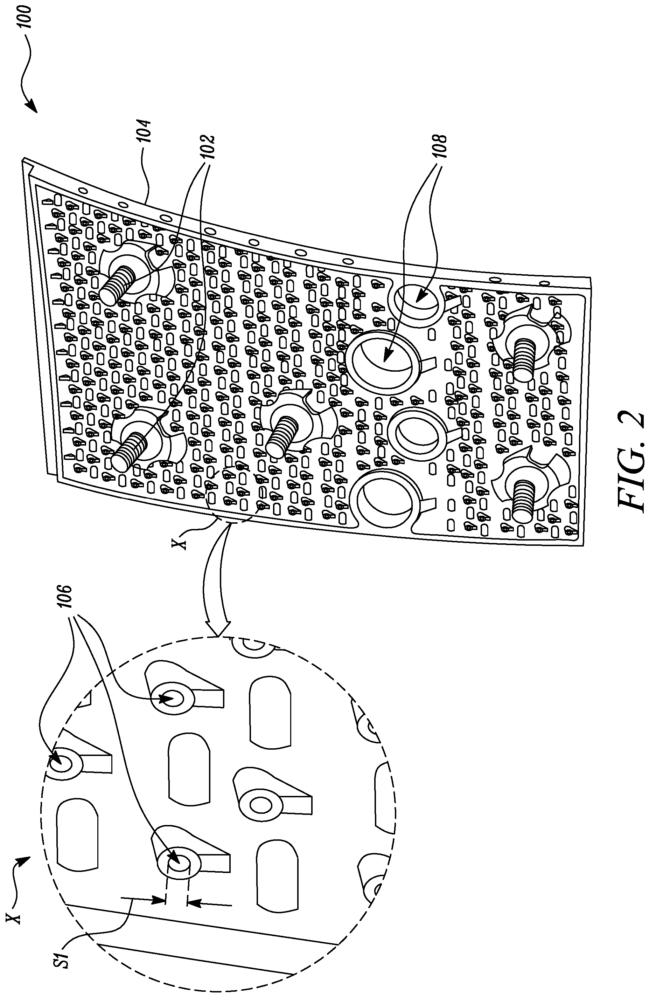

Referring to FIG. 2, a perspective view of a component 100 of the gas turbine engine 10 (see FIG. 1) is illustrated. The component 100 includes a combustor tile for the gas turbine engine combustor 16 (see FIG. 1). The component 100 may be hereinafter interchangeably referred to as "the combustor tile 100". The combustor 16 includes a plurality of the combustor tiles 100, the details of the exemplary design are set forth herein. For explanatory purposes, a single combustor tile 100 is depicted herein. Each combustor tile 100 is coupled to a cold skin or outer surface of a liner (not shown) of the combustor 16. One or more fasteners 102 secure each combustor tile 100 to the liner. The combustor tiles 100 may be serviceable and may be replaced when they get damaged or are otherwise sufficiently depleted in performance quality.

The combustor tile 100 includes a base plate 104. The base plate 104 defines one or more cooling holes 106 and one or more dilution holes 108. The one or more cooling holes 106 may be orthogonal to or inclined to the base plate 104 of the combustor tile 100. A fuel nozzle (not shown) directs pressurized fuel into the combustor 16. The combusted fuel may be ignited by an igniter (not shown) that subjects the combustor 16 to elevated temperatures, which may cause extreme temperatures to impinge upon a hot surface of each combustor tile 100. The cooling holes 106 may allow a fluid flow, such as air flow, to pass therethrough to facilitate cooling of the combustor tile 100. It should be noted that a design of the combustor tile 100 as shown herein is exemplary in nature and the combustor tile 100 may have any other design. Although the component 100 includes multiple cooling holes 106 herein, it may be contemplated that the component 100 may include a single cooling hole 106 or passageway defined therein, without any limitations.

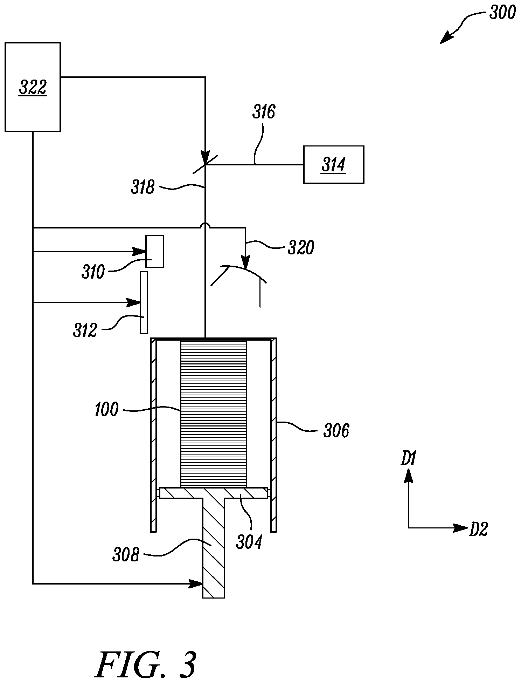

**FIG. 3** illustrates an exemplary laser additive manufacturing machine 300. The laser additive manufacturing machine 300 is a laser powder bed fusion machine herein. The laser powder bed fusion machine may enable manufacturing of complex parts, e.g., components of the gas turbine engine 10 (see FIG. 1) to meet desired design tolerances and air flow requirements. The laser additive manufacturing machine 300 may be used to manufacture the component 100.

As shown in FIG. 3, the component 100 to be manufactured is produced layer-wise on a building support 304 of the laser additive manufacturing machine 300. The building support 304 forms the bottom of a hollow chamber that is open at the top, in which the building process takes place and a frame 306 of the laser additive manufacturing machine 300 forms sidewalls thereof. The building support 304 may be connected to a lifting mechanism 308 of the laser additive manufacturing machine 300 that is able to move the building support 304 in a vertical direction D1. The laser additive manufacturing machine 300 may include a recoater 310 for applying a layer of a powder material. The powder material may include, for example, polymer powders, metal powders, ceramic powders, or composite powders composed of different materials. Furthermore, fillers and/or additives may be added to the powder materials.

In addition, the laser additive manufacturing machine 300 may include an application device 312 that can be moved in a horizontal direction D2 and serves for smoothing an applied powder layer. Furthermore, the laser additive manufacturing machine 300 includes a laser 314 that generates a laser beam 316 that can be directed to arbitrary points by means of a deflection device 318 of the laser additive manufacturing machine 300. By the action of the laser beam 316 onto the powder material, the powder material can be heated selectively, so that the powder material solidifies and corresponds to a cross-section of the component 100 to be manufactured.

The laser additive manufacturing machine 300 may also include a heating device 320, for heating a newly applied powder layer up to a working temperature below a temperature at which the solidification of the powder material occurs. Further, a control device 322 of the laser additive manufacturing machine 300 may be in communication with the laser 314, the deflection device 318, the recoater 310, the application device 312, and the lifting mechanism 308 to control the building process of the component 100.

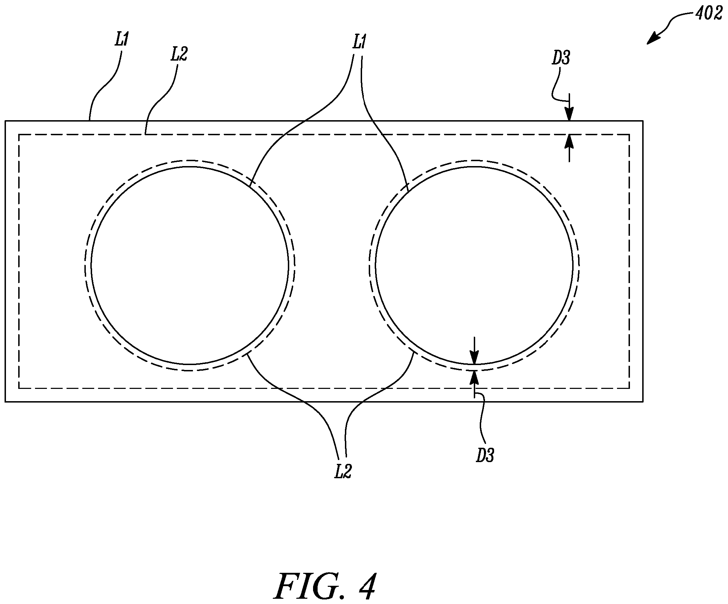

Referring now to **FIG. 4****,** during the manufacturing of any object, such as an object 402, it is critical to determine value of a "beam offset" for the laser additive manufacturing machine 300 (see FIG. 3). The term "beam offset" specifies a chosen offset at the contour of a cross-section of the object 402. By this beam offset, which is usually perpendicular to the contour, it is achieved that the outer dimension of the object 402 to be manufactured is realized as close as possible to design specifications. The term "beam offset" is a machine specific tuning parameter which offsets the laser path into the object 402 to take into account the effect of a width of the laser beam 316 (see FIG. 3) and a melt pool geometry. As shown in FIG. 4, the laser beam 316 may be moved by a distance D3 to compensate for the width of the laser beam 216. The solid line L1 depicts the original contour line and the dashed line L2 depicts the new contour line after considering the beam offset. Currently the value of the beam offset is determined via a measurement of macro scale physical artefacts manufactured on the laser additive manufacturing machine 300, which may be time consuming and may be prone to errors.

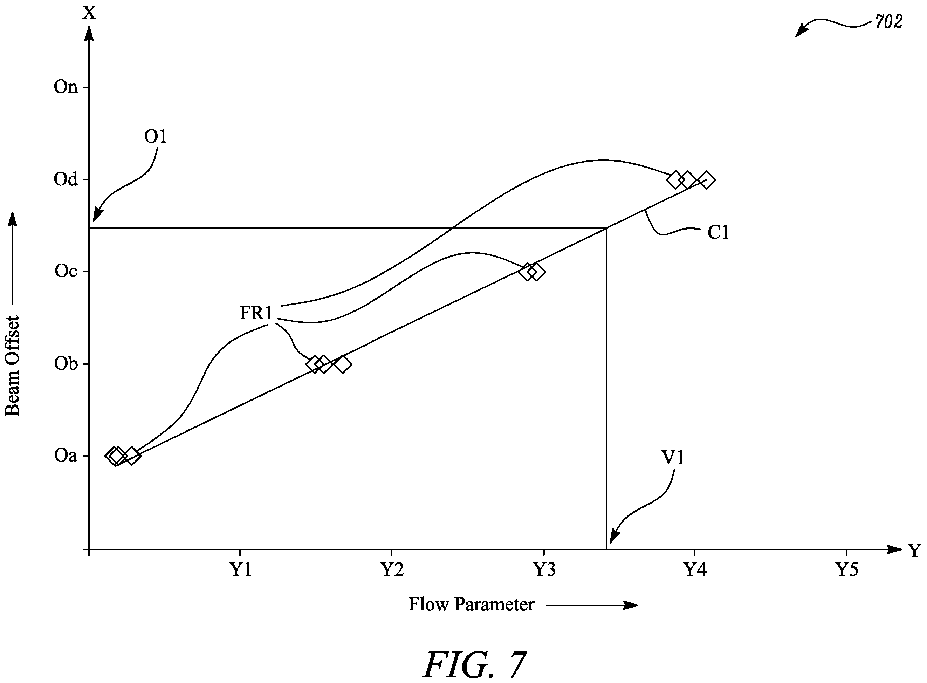

The present disclosure relates to a technique of operating the laser additive manufacturing machine 300 of FIG. 3 to manufacture the component 100 (see FIG. 2), such that the component 100 has desired specifications. For example, when the component 100 includes the cooling holes 106 (see FIG. 2), it may be desirable that the cooling holes 106 have a target hole size S1 (see FIG. 2) that meets desired air flow requirements and is manufactured at a target beam offset value O1 (see FIG. 7) of the laser additive manufacturing machine 300.

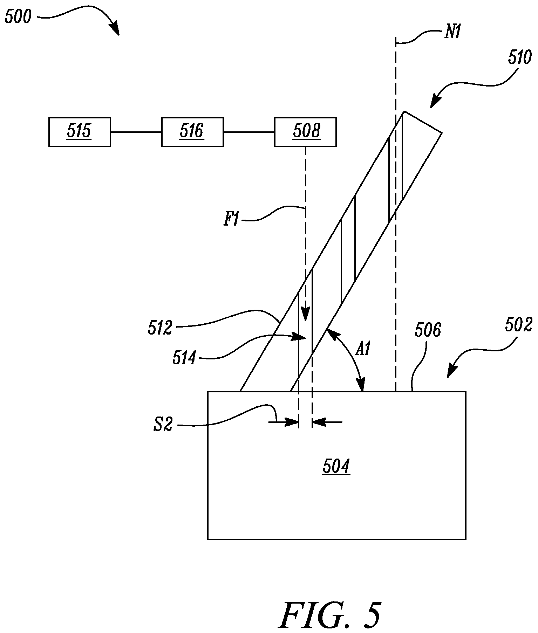

**FIG. 5** illustrates an exemplary system 500 for determining the target beam offset value O1 (see FIG. 7) for the laser additive manufacturing machine 300 (see FIG. 3). A technique of determining the target beam offset value O1 for the laser additive manufacturing machine 300 will now be explained in detail. The system 500 includes a testing rig 502. The testing rig 502 includes a base 504 defining a test plane 506. The system 500 may also include a fluid source 508 that directs a fluid flow F1. For example, the fluid source 508 may supply a pressurized air flow.

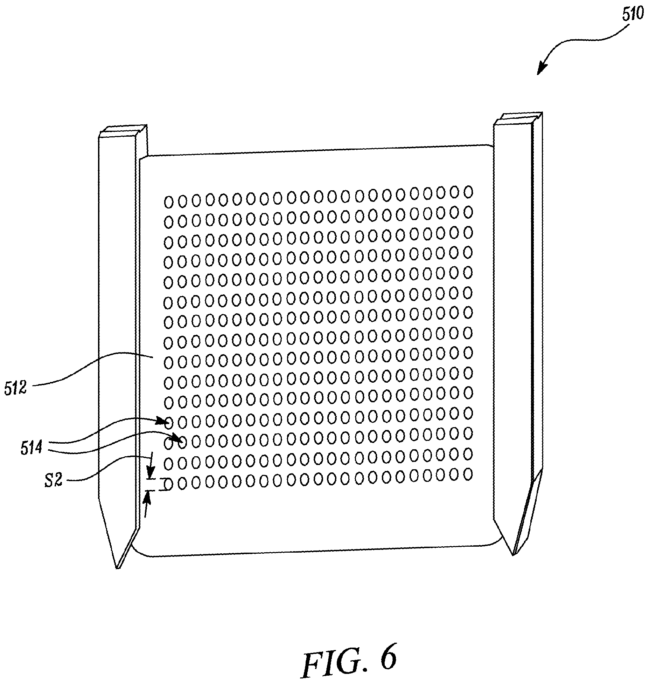

Further, the system 500 includes at least one first fluid-flow coupon 510. The at least one first fluid-flow coupon 510, which is shown side on in FIG.5 and in perspective in **FIG. 6****,** is manufactured via the laser additive manufacturing machine 300 (see FIG. 3) at a corresponding beam offset value Oa, Ob,..., On (see FIG. 7) of the laser additive manufacturing machine 300. The at least one first fluid-flow coupon 510 includes a plate 512 defining a plurality of holes 514 extending therethrough. The plurality of holes 514 define a hole size S2.

In some embodiments, at least one first fluid-flow coupon 510 may include a plurality of first fluid-flow coupons 510 that may be manufactured at a corresponding beam offset value Oa, Ob,..., On of the laser additive manufacturing machine 300. In some examples, the holes 514 of each of the plurality of first fluid-flow coupons 510 may be manufactured at increasing beam offset values Oa, Ob,..., On of the laser additive manufacturing machine 300. For example, one of the first fluid-flow coupon 510 may be manufactured at the beam offset value Oa of 40 micrometres, another first fluid-flow coupon 510 may be manufactured at the beam offset value Ob of 50 micrometres, and so on. In other embodiments, the at least one first fluid-flow coupon 510 may include a single fluid-flow coupon 510 having the plurality of holes 514 that may be manufactured at different beam offset values Oa, Ob,..., On of the laser additive manufacturing machine 300.

Referring again to FIG. 5, each of the plurality of first fluid-flow coupons 510 may be disposed in the testing rig 502 and the fluid flow F1 may be directed towards each of the plurality of first fluid-flow coupons 510. The first fluid-flow coupon 510 may be manufactured from any material. For example, the first fluid-flow coupon 510 may be manufactured from a nickel superalloy. In some embodiments, a material of the first fluid-flow coupon 510 may be same as a material of the component 100 (see FIG. 2). It should be noted that a geometry of the first fluid-flow coupon 510 may correspond to a geometry of the component 100 to be manufactured.

The at least one first fluid-flow coupon 510 is disposed in the testing rig 502. In some embodiments, the at least one first fluid-flow coupon 510 is angularly placed on the test plane 506 such that the plurality of holes 514 of the at least one first fluid-flow coupon 510 extends parallel to a normal N1 to the test plane 506. In other words, the at least one first fluid-flow coupon 510 is disposed at an angle A1 relative to the test plane 506. Further, the fluid source 508 directs the fluid flow F1 towards the at least one first fluid-flow coupon 510. The system 500 may further include at least one sensor 515, such as a flow meter, that may determine a fluid flow rate FR1 (shown in FIG. 7) of the fluid flow F1 through the at least one first fluid-flow coupon 510.

The system 500 further includes a controller 516 communicably coupled to the sensor 515. The controller 516 includes one or more memories and one or more processors communicably coupled to the one or more memories. The processors may be any device that performs logic operations. It should be noted that the processors may embody a single microprocessor or multiple microprocessors for receiving various detection signals. Numerous commercially available microprocessors may be configured to perform the functions of the processors. The processors may further include a general processor, a central processing unit, an application specific integrated circuit (ASIC), a digital signal processor, a field programmable gate array (FPGA), a digital circuit, an analog circuit, a controller, a microcontroller, any other type of processor, or any combination thereof. The processors may include one or more components that may be operable to execute computer executable instructions or computer code that may be stored and retrieved from the one or more memories.

The controller 516 receives the value of the fluid flow rates FR1 from the sensor 515. Further, referring to FIGS. 5 and 7, the controller 516 may generate a calibration curve C1 correlating a beam offset of the laser additive manufacturing machine 300 (see FIG. 3) with a flow parameter based on the fluid flow rate FR1 through the at least one first fluid-flow coupon 510 and the corresponding beam offset value Oa, Ob,..., On. In some embodiments, the flow parameter is an effective flow area per hole 514 of the at least one first fluid-flow coupon 510. Further, the memory of the controller 516 may store a target flow value V1. More particularly, the target flow value V1 may be based on desired air flow requirements of the component 100 (see FIG. 2). The target flow value V1 may correspond to a specific value of the flow parameter. For example, the target flow value V1 may be equal to X cubic meter per second for an effective flow area of 0.2 square millimetre.

**FIG. 7** illustrates a plot 702 generated by the controller 516 (see FIG. 5). Various values for the flow parameter Y1, Y2,...Yn are marked on the X-axis and various values for the beam offset Oa, Ob,..., On, in an increasing order, are marked on the Y-axis. Further, the calibration curve C1 is plotted based on the fluid flow rates FR1 as measured by the sensors 515 (see FIG. 5). Once the calibration curve C1 is plotted, the target beam offset value O1 may be determined based on the target flow value V1.

Referring to FIGS. 3, 5, and 7, the controller 516 may transmit the target beam offset value O1 to the control device 322 of the laser additive manufacturing machine 300. The laser additive manufacturing machine 300 may be calibrated using the target beam offset value O1. The component 100 (see FIG. 2) may be then manufactured on the laser additive manufacturing machine 300 with the target beam offset value O1. In some examples, the laser additive manufacturing machine 300 may be calibrated before first use, before manufacturing the component 100, or after an overhaul of the laser additive manufacturing machine 300. The system 500 may further include a user interface (not shown). The user interface may include any input/output device, such as, a tablet, a mobile phone, a laptop, and the like. In some examples, the controller 516 may transmit the target beam offset value O1 to the user interface for display to the operator or the target hole size S1 may be saved in the memories of the controller 516.

The system 500 may provide a cost-effective and time-effective approach to manufacture complex parts using the laser additive manufacturing machine 300. Components manufactured using the system 500 described herein may exhibit improved repeatability over time between same or different laser additive manufacturing machines. The system 500 may also ensure that a direct calibration of air flow output can take place, resulting in the ability to obtain the same air flow performance between different laser additive manufacturing machines or between different components manufactured on the same laser additive manufacturing machine, which may have different characteristics. Further, the technique described herein may also ensure that the manufactured component 100 may maintain air flow compliance through re-calibration on changing the conditions of the laser additive manufacturing machine 300.

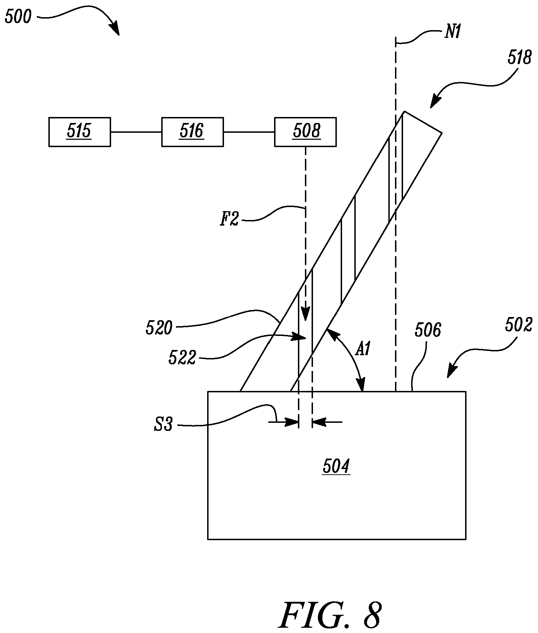

Referring now to **FIG. 8****,** the system 500 may also be used to determine the target hole size S1 (see FIG. 2) of the component 100 (see FIG. 2). FIG. 8 depicts a first technique of determining the target hole size S1 of the component 100 using the system 500. The target hole size S1 includes a diameter of the component 100 that may provide a desired fluid flow requirement for the component 100. In order to determine the target hole size S1, the controller 516 receives a fluid flow requirement of the component 100. In some examples, the fluid flow requirement may be prestored in the memories of the controller 516.

Further, the system 500 includes a plurality of second fluid-flow coupons 518 (only one shown in FIG. 8 for illustrative purposes). The plurality of second fluid-flow coupons 518 are manufactured on the laser additive manufacturing machine 300 (see FIG. 3) at a same machine setting of the laser additive manufacturing machine 300. The machine setting may include one or more parameters such as, but not limited to, laser power, laser alignment, laser spot size, beam offset, and the like. Each second fluid-flow coupon 518 includes a plate 520 defining a plurality of holes 522 extending therethrough and having a hole size S3. The hole sizes S3 of the plurality of second fluid-flow coupons 518 are different from each other. Further, each second fluid-flow coupon 518 is representative of the component 100.

Each second fluid-flow coupon 518 is disposed in the testing rig 502. In some embodiments, the second fluid-flow coupons 518 may be disposed at different angular orientations relative to the test plane 506. For example, one of the second fluid-flow coupon 518 may be disposed at an angle of 30 degrees relative to the test plane 506, another second fluid-flow coupon 518 may be disposed at an angle of 40 degrees relative to the test plane 506, and so on. As shown in FIG. 8, one second fluid-flow coupon 518 is disposed at the angle A1 relative to the test plane 506.

Furthermore, a fluid flow F2 is directed towards each second fluid-flow coupon 518. Moreover, the sensors 515 measure a fluid flow rate of the fluid flow F2 through each second fluid-flow coupon 518. The fluid flow rates through each second fluid-flow coupon 518 as measured by the sensors 515 are then received by the controller 516. Further, the controller 516 is configured to compare the fluid flow rate of each second fluid-flow coupon 518 with the fluid flow requirement of the component 100. The controller 516 is configured to select one second fluid-flow coupon 518 from the plurality of second fluid-flow coupons 518 that has the fluid flow rate closest to the fluid flow requirement of the component 100. Specifically, based on the comparison between the fluid flow rate of each second fluid-flow coupon 518 and the fluid flow requirement of the component 100, the controller 516 determines one second fluid-flow coupon 518 that has the fluid flow rate closest to the fluid flow requirement of the component 100. Further, the controller 516 is configured to determine the hole size S3 of the one second fluid-flow coupon 518 as the target hole size S1 of the component 100.

The controller 516 may transmit the target hole size S1 to the control device 322 (see FIG. 3) of the laser additive manufacturing machine 300. Subsequently, the laser additive manufacturing machine 300 may be used to manufacture the component 100 using the target hole size S1 at the same machine setting. In some examples, the controller 516 may transmit the target hole size S1 to the user interface for display to the operator or the target hole size S1 may be saved in the memories of the controller 516.

In some cases, the component 100 may include one or more features, such as the cooling holes 106 (see FIG. 2). Such features may be arranged in a variety of orientations. By using a range of the second fluid-flow coupons 518 disposed in different angular orientations, the optimal target hole size S1 for the cooling hole 106 that meets the desired air flow requirements may be determined. The component 100 manufactured by the technique described herein may have the optimal target hole size S1 to meet the desired air flow requirements. The technique of determining the target hole size S1 as mentioned herein may be cost-effective and time-effective. Further, the technique may allow manufacturing of multiple parts with the desired air flow requirements.

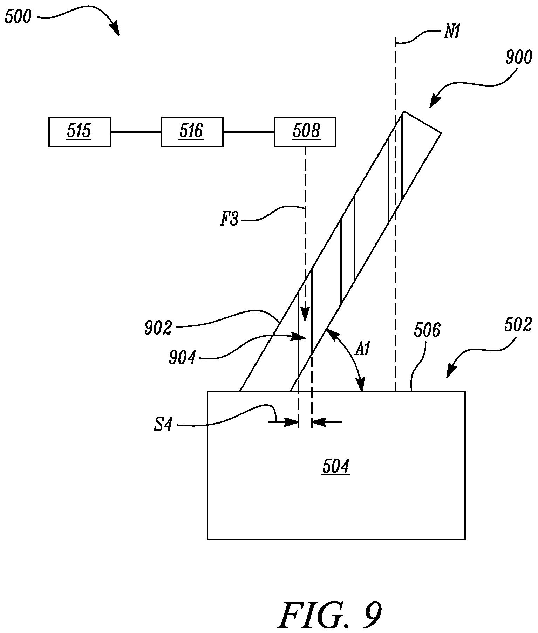

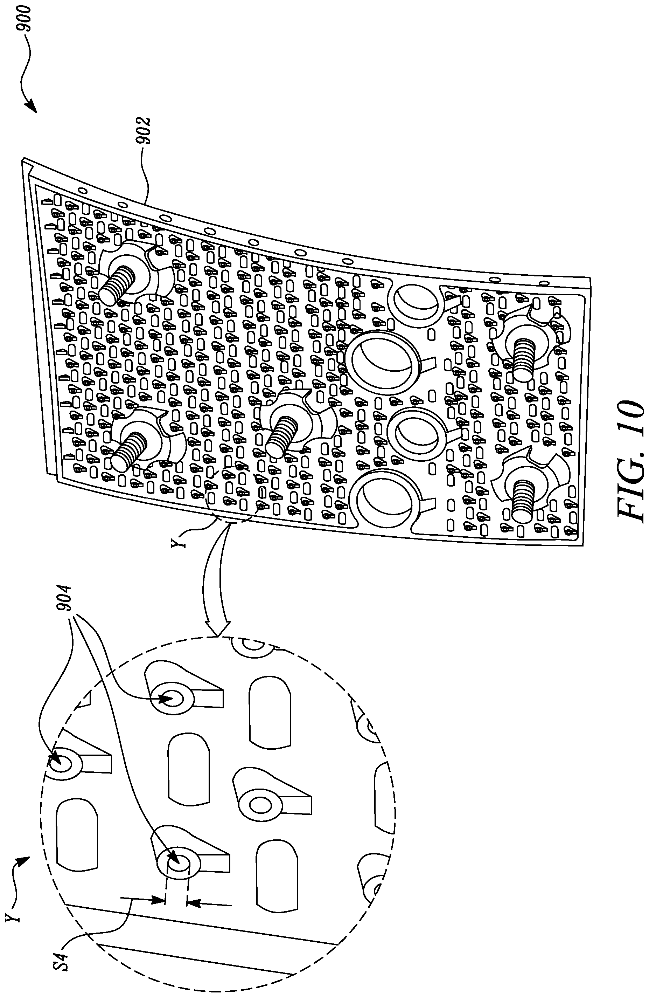

**FIGS. 9** **and** **10** depict a second technique of determining the target hole size S1 (see FIG. 2) of the component 100 (see FIG. 2) using the system 500. In order to determine the target hole size S1, the controller 516 receives a fluid flow requirement of the component 100. In some examples, the fluid flow requirement may be prestored in the memories of the controller 516.

Further, the system 500 includes a plurality of trial components 900 (only one shown in FIGS. 9 and 10 for illustrative purposes). The plurality of trial components 900 are manufactured on the laser additive manufacturing machine 300 (see FIG. 3) at a same machine setting of the laser additive manufacturing machine 300. The machine setting may include one or more parameters such as, but not limited to, laser power, laser alignment, laser spot size, beam offset, and the like. Each trial component 900 includes a base plate 902 defining a plurality of trial flow features 904 extending therethrough and having a feature size S4. The feature sizes S4 of the plurality of trial components 900 are different from each other. Further, a shape of each trial component 900 is same as a shape of the component 100.

Further, each trial component 900 is disposed in the testing rig 502. In some embodiments, the trial components 900 may be disposed at different angular orientations relative to the test plane 506. For example, one of the trial component 900 may be disposed at an angle of 30 degrees relative to the test plane 506, another trial component 900 may be disposed at an angle of 40 degrees relative to the test plane 506, and so on. As shown in FIG. 9, one trial component 900 is disposed at the angle A1 relative to the test plane 506.

Furthermore, a fluid flow F3 is directed towards each trial component 900. Moreover, the sensors 515 measure a fluid flow rate of the fluid flow F3 through each trial component 900. The fluid flow rates through each trial component 900 as measured by the sensors 515 are then received by the controller 516. Further, the controller 516 is configured to compare the fluid flow rate of each trial component 900 with the fluid flow requirement of the component 100. The controller 516 is configured to select one trial component 900 from the plurality of trial components 900 that has the fluid flow rate closest to the fluid flow requirement of the component 100. Specifically, based on the comparison between the fluid flow rate of each trial component 900 and the fluid flow requirement of the component 100, the controller 516 determines one trial component 900 that has the fluid flow rate closest to the fluid flow requirement of the component 100. Further, the controller 516 is configured to determine the feature size S4 of the one trial component 900 as the target hole size S1 of the component 100.

The controller 516 may transmit the target hole size S1 to the control device 322 (see FIG. 3) of the laser additive manufacturing machine 300. Subsequently, the laser additive manufacturing machine 300 may be used to manufacture the component 100 using the target hole size S1 at the same machine setting. In some examples, the controller 516 may transmit the target hole size S1 to the user interface for display to the operator or the target hole size S1 may be saved in the memories of the controller 516.

In some cases, the component 100 may include one or more features, such as the cooling holes 106 (see FIG. 2). Such features may be arranged in a variety of orientations. By using a range of trial components 900 disposed in different angular orientations, the optimal target hole size S1 for the cooling hole 106 that meets the desired air flow requirements may be determined. The component 100 manufactured by the technique described herein may have the optimal target hole size S1 to meet the desired air flow requirements. The technique of determining the target hole size S1 as mentioned herein may be time-effective. Further, the technique may allow manufacturing of multiple parts with the desired air flow requirements.

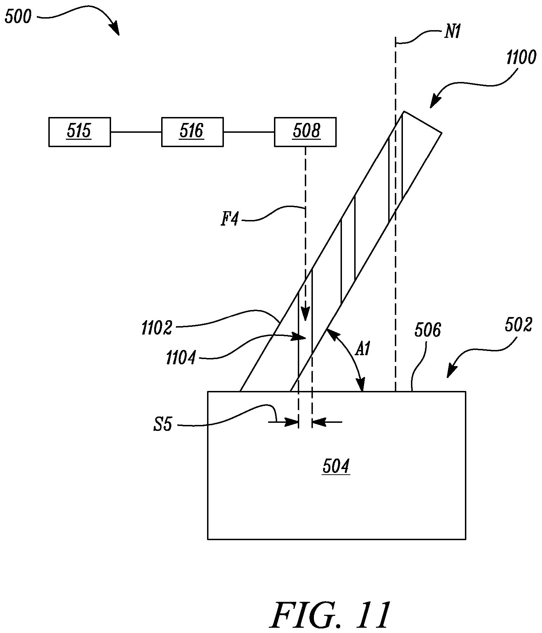

Referring now to **FIG. 11****,** the present disclosure also teaches a technique of monitoring a health of the laser additive manufacturing machine 300 (see FIG. 3) using the system 500. The system 500 includes a plurality of third fluid-flow coupons 1100 (only one shown in FIG. 11 for illustrative purposes). The plurality of third fluid-flow coupons 1100 are manufactured at a same machine setting of the laser additive manufacturing machine 300. The machine setting may include one or more parameters such as, but not limited to, laser power, laser alignment, laser spot size, beam offset, and the like. In other examples, the plurality of third fluid-flow coupons 1100 may be manufactured on different laser additive manufacturing machines (similar to the laser additive manufacturing machine 300) but at the same machine setting. Each third fluid-flow coupon 1100 includes a plate 1102 defining a plurality of holes 1104 extending therethrough and having a hole size S5. The hole sizes S5 of the plurality of third fluid-flow coupons 1100 are equal to each other. Further, each third fluid-flow coupon 1100 is disposed in the testing rig 502. Further, a shape of each third fluid-flow coupon 1100 may be same as a shape of the component 100.

Subsequently, a fluid flow F4 is directed towards each third fluid-flow coupon 1100. Moreover, the sensors 515 measure a fluid flow rate of the fluid flow F4 through each third fluid-flow coupon 1100. The fluid flow rates through each third fluid-flow coupon 1100 as measured by the sensors 515 are then received by the controller 516. Further, the controller 516 is configured to monitor the health of the laser additive manufacturing machine 300 based on a variation of the fluid flow rates through the plurality of third fluid-flow coupons 1100. Specifically, if the fluid flow rates are consistent with each other or lie within a predetermined threshold range, the controller 516 may determine that the laser additive manufacturing machine 300 is performing as expected. Accordingly, it may be concluded that components (such as the component 100) manufactured on the laser additive manufacturing machine 300 may have consistent air flow rates and may exhibit optimum performance. However, if the fluid flow rates are different from each other or lie outside of the predetermined threshold range, the controller 516 may determine that the laser additive manufacturing machine 300 is not performing as expected. Accordingly, it may be concluded that components manufactured on the laser additive manufacturing machine 300 may have inconsistent air flow rates and may exhibit non-optimal performance.

As the laser additive manufacturing machine 300 may be used to manufacture a plurality of similar parts, differences in machine conditions or process control during manufacturing of the parts may have an impact on a repeatability of the manufactured parts. In some cases, the manufactured parts may not perform as desired or the manufactured parts may not adhere to desired specifications. The health monitoring of the laser additive manufacturing machine 300 as provided by the technique described herein may ensure that the machine conditions or process control are appropriate to meet the desired specification. This may prevent wastage of resources that may arise due to non-conformance of parts with desired specification.

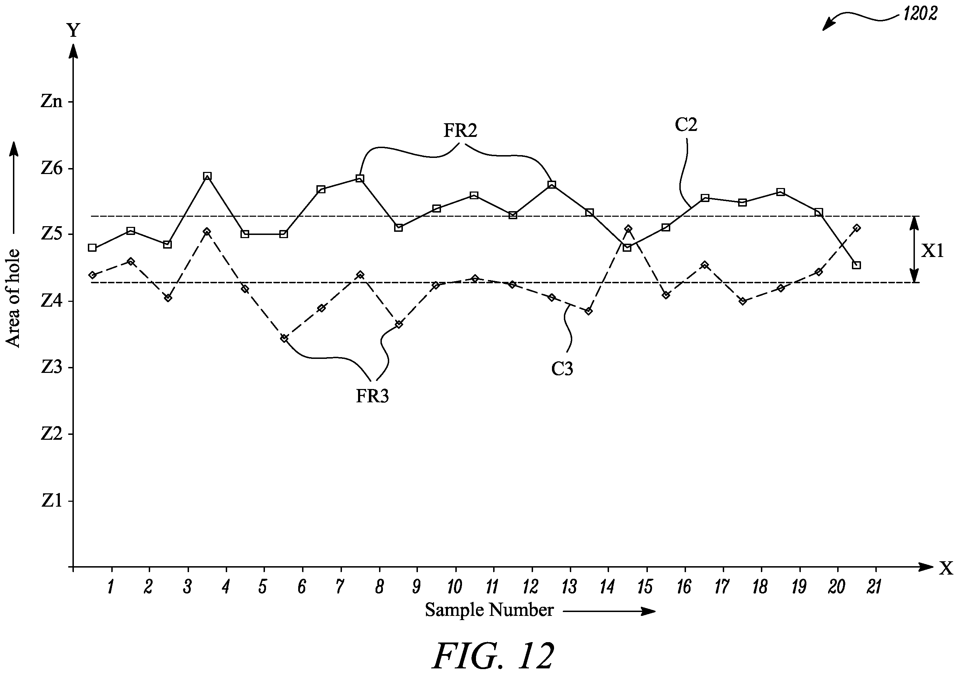

**FIG. 12** illustrates an exemplary plot 1202 depicting effects of differences in the condition of the laser 314 that may result in different melt pool geometries in the third air-flow coupons 1100 (see FIG. 11) manufactured on two different laser additive manufacturing machines (similar to the laser additive manufacturing machine 300 of FIG. 3). The third air-flow coupons 1100 were manufactured on two different laser additive manufacturing machines at the same machine setting. Various fluid flow sample numbers for different third air-flow coupons 1100 were marked on the X-axis and various values for an area Z1, Z2,..., Zn of the holes 1104 of the third air-flow coupons 1100, in an increasing order, were marked on the Y-axis. Further, fluid flow rates FR2 at different time instances through each third air-flow coupon 1100 manufactured on a first laser additive manufacturing machine was measured and plotted to obtain a first curve C2. Furthermore, fluid flow rates FR3 at different times instances through each third air-flow coupon 1100 manufactured on a second laser additive manufacturing machine was measured and plotted to obtain a second curve C3.

From the plot 1202, it was observed that approximately 19% of difference in the area X1 of the hole 1104 may amount to approximately 49% of difference in the fluid flow rates FR2, FR3 through the third air-flow coupons 1100. The reasons for these differences may be predominantly associated with differences in the condition of the laser 314 resulting in different melt pool geometries in the building process.

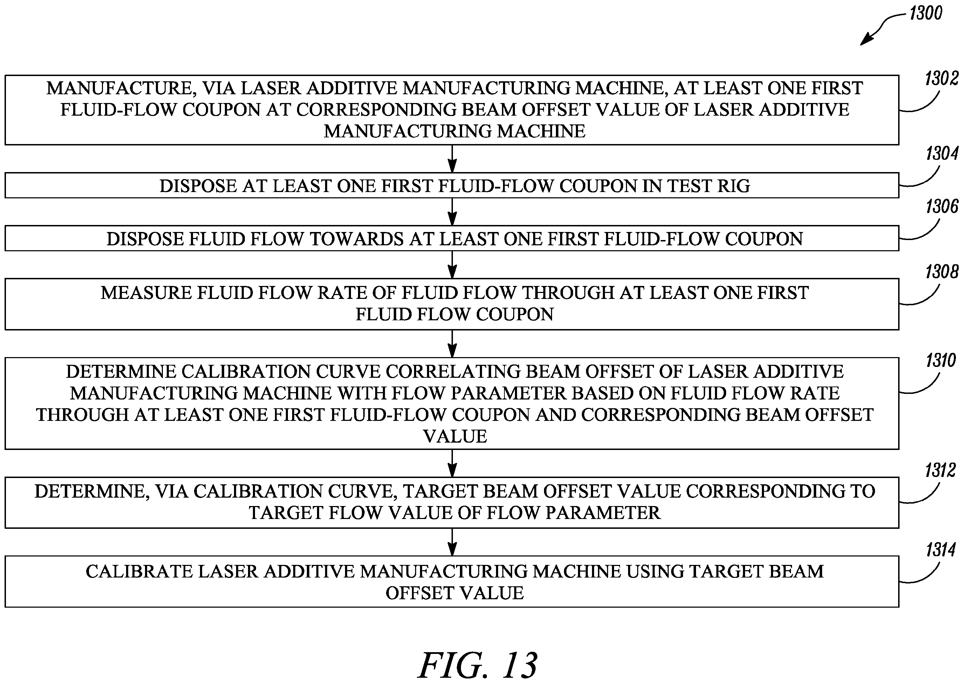

**FIG. 13** is a flowchart for a method 1300 of operating the laser additive manufacturing machine 300. The laser additive manufacturing machine 300 is the laser powder bed fusion machine. Referring to FIGS. 2 to 7 and FIG. 13, at step 1302, the at least one first fluid-flow coupon 510 is manufactured via the laser additive manufacturing machine 300 at the corresponding beam offset value Oa, Ob,..., On of the laser additive manufacturing machine 300. The at least one first fluid-flow coupon 510 includes the plate 512 defining the plurality of holes 514 extending therethrough. At step 1304, the at least one first fluid-flow coupon 510 is disposed in the testing rig 502. The step 1304 of disposing the at least one first fluid-flow coupon 510 in the testing rig 502 further includes angularly placing the at least one first fluid-flow coupon 510 on the test plane 506 such that the plurality of holes 514 of the at least one first fluid-flow coupon 510 extends parallel to the normal N1 to the test plane 506.

At step 1306, the fluid flow F1 is directed towards the at least one first fluid-flow coupon 510. At step 1308, the fluid flow rate FR1 of the fluid flow F1 through the at least one first fluid-flow coupon 510 is measured. At step 1310, the calibration curve C1 correlating the beam offset of the laser additive manufacturing machine 300 with the flow parameter based on the fluid flow rate FR1 through the at least one first fluid-flow coupon 510 and the corresponding beam offset value Oa, Ob,..., On is determined. The flow parameter is the effective flow area per hole of the at least one first fluid-flow coupon 510. At step 1312, the target beam offset value O1 corresponding to the target flow value V1 of the flow parameter is determined via the calibration curve C1. At step 1314, the laser additive manufacturing machine 300 is calibrated using the target beam offset value O1.

The method 1300 of the present invention may provide a cost-effective and time-effective approach to manufacture complex parts using the laser additive manufacturing machine 300. Components manufactured using the method 1300 described herein may exhibit improved repeatability over time between same or different laser additive manufacturing machines. The method 1300 ensures that a direct calibration of air flow output can take place, resulting in the ability to obtain the same air flow performance between different laser additive manufacturing machines or between different components manufactured on the same laser additive manufacturing machine, which may have different characteristics. Further, the method 1300 may also ensure that components manufactured using the method 1300 mentioned above may maintain air flow compliance through re-calibration on changing the conditions of the laser additive manufacturing machine 300.

Referring to FIGS. 8 and 13, in some embodiments, the method 1300 includes a step at which the fluid flow requirement of the component 100 is received. The method 1300 further includes a step at which the plurality of second fluid-flow coupons 518 are manufactured, via the laser additive manufacturing machine 300, at the same machine setting of the laser additive manufacturing machine 300. Each second fluid-flow coupon 518 includes the plate 520 defining the plurality of holes 522 extending therethrough and having the hole size S3. The hole sizes S3 of the plurality of second fluid-flow coupons 518 are different from each other. Each second fluid-flow coupon 518 is representative of the component 100. The method 1300 further includes a step at which each second fluid-flow coupon 518 is disposed in the testing rig 502. The method 1300 further includes a step at which the fluid flow F2 is directed towards each second fluid-flow coupon 518. The method 1300 further includes a step at which the fluid flow rate of the fluid flow F2 through each second fluid-flow coupon 518 is measured. The method 1300 further includes a step at which the fluid flow rate of each second fluid-flow coupon 518 is compared with the fluid flow requirement of the component 100. The method 1300 further includes a step at which one second fluid-flow coupon 518 from the plurality of second fluid-flow coupons 518 that has the fluid flow rate closest to the fluid flow requirement of the component 100 is selected. The method 1300 further includes a step at which the hole size S3 of the one second fluid-flow coupon 518 is determined as the target hole size S1 of the component 100.

In some cases, the component 100 may include one or more features, such as the cooling holes 106, that may be arranged in a variety of orientations. By using the range of the second fluid-flow coupons 518 disposed in different angular orientations, the optimal target hole size S1 for the cooling hole 106 that meets the desired air flow requirements may be determined. The method 1300 of determining the target hole size S1 as mentioned herein may be cost-effective and time-effective. Further, the method 1300 may allow manufacturing of multiple parts with the desired air flow requirements.

In some embodiments, the method 1300 further includes a step at which the component 100 is manufactured, via the laser additive manufacturing machine 300, using the target hole size S1 at the same machine setting. The component 100 manufactured by the method 1300 may have the one or more cooling holes 106 having the optimal target hole size S1 to meet the desired air flow requirements.

Referring to FIGS. 9, 10, and 13, in some embodiments, the method 1300 further includes a step at which the fluid flow requirement of the component 100 is received. The method 1300 further includes a step at which the plurality of trial components 900 are manufactured, via the laser additive manufacturing machine 300, at the same machine setting of the laser additive manufacturing machine 300. Each trial component 900 includes the plate 902 defining the plurality of trial flow features 904 extending therethrough and having the feature size S4. The feature sizes S4 of the plurality of trial components 900 are different from each other. The shape of each trial component 900 is same as the shape of the component 100. The method 1300 further includes a step at which each trial component 900 is disposed in the testing rig 502. The method 1300 further includes a step at which the fluid flow F3 is directed towards each trial component 900. The method 1300 further includes a step at which the fluid flow rate of the fluid flow F3 through each trial component 900 is measured. The method 1300 further includes a step at which the fluid flow rate of each trial component 900 is compared with the fluid flow requirement of the component 100. The method 1300 further includes a step at which one trial component 900 from the plurality of trial components 900 that has the fluid flow rate closest to the fluid flow requirement of the component 100 is selected. The method 1300 further includes a step at which the feature size S4 of the one trial component 900 is determined as the target hole size S1 of the component 100.

In some cases, the component 100 may include one or more features, such as the cooling holes 106, that may be arranged in a variety of orientations. By using a range of the trial components 900 disposed in different angular orientations, the optimal target hole size S1 for the cooling hole 106 that meets the desired air flow requirements can be established. The method 1300 of determining the target hole size S1 as mentioned herein may be time-effective. Further, the method 1300 may allow manufacturing of multiple parts with the desired air flow requirements.

In some embodiments, the method 1300 further includes manufacturing, via the laser additive manufacturing machine 300, the component 100 using the target hole size S1 at the same machine setting. The component 100 manufactured by the method 1300 may have the one or more cooling holes 106 having the optimal target hole size S1 to meet the desired air flow requirements.

Referring to FIGS. 11 and 13, in some embodiments, the method 1300 further includes a step at which the plurality of third fluid-flow coupons 1100 are manufactured, via the laser additive manufacturing machine 300, at the same machine setting of the laser additive manufacturing machine 300. Each third fluid-flow coupon includes the plate 1102 defining the plurality of holes 1104 extending therethrough and having the hole size S5. The hole sizes S5 of the plurality of third fluid-flow coupons 1100 are equal to each other. The method 1300 further includes a step at which each third fluid-flow coupon 1100 is disposed in the testing rig 502. The method 1300 further includes a step at which the fluid flow F4 is directed towards each third fluid-flow coupon 1100. The method 1300 further includes a step at which the fluid flow rate of the fluid flow F4 through each third fluid-flow coupon 1100 is measured. The method 1300 further includes a step at which the health of the laser additive manufacturing machine 300 is monitored based on the variation of the fluid flow rates through the plurality of third fluid-flow coupons 1100.

The laser additive manufacturing machine 300 may be used to manufacture a plurality of similar parts. Differences in machine conditions or process control during manufacturing of the parts may have an impact on a repeatability of the manufactured parts. In some cases, the manufactured parts may not perform as desired or the manufactured parts may not adhere to desired specifications. Thus, the method 1300 of monitoring the health of the laser additive manufacturing machine 300 may ensure that the manufactured parts meet the desired specification. This may prevent wastage of resources that may arise due to non-conformance of the manufactured parts with desired specification.

Referring now to FIGS. 2 to 13, the present disclosure is also directed towards the component 100 manufactured using the method 1300. The component 100 manufactured based on the method 1300 described herein may meet desired design tolerances, may perform in an optimal manner, and may meet air flow requirements. Specifically, the component 100 includes the combustor tile 100 herein. The combustor tile 100 includes the cooling holes 106 that may have the optimum target hole size S1, may provide optimal cooling, and may meet air flow requirements. Further, the gas turbine engine includes the component 100 manufactured using the method 1300.

## Claims

1. A method (1300) of operating a laser additive manufacturing machine (300), the method (1300) comprising the steps of:
manufacturing, via the laser additive manufacturing machine (300), at least one first fluid-flow coupon (510) at a corresponding beam offset value (Oa, Ob,..., On) of the laser additive manufacturing machine (300), the at least one first fluid-flow coupon (510) including a plate (512) defining a plurality of holes (514) extending therethrough;
disposing the at least one first fluid-flow coupon (510) in a testing rig (502);
directing a fluid flow (F1) towards the at least one first fluid-flow coupon (510);
measuring a fluid flow rate (FR1) of the fluid flow (F1) through the at least one first fluid-flow coupon (510);
determining a calibration curve (C1) by correlating a beam offset of the laser additive manufacturing machine (300) with a flow parameter based on the fluid flow rate (FR1) through the at least one first fluid-flow coupon (510) and the corresponding beam offset value (Oa, Ob,..., On);
determining, via the calibration curve (C1), a target beam offset value (O1) corresponding to a target flow value (V1) of the flow parameter; and
calibrating and operating the laser additive manufacturing machine (300) using the target beam offset value (O1).

2. The method of claim 1, wherein disposing the at least one first fluid-flow coupon (510) in the testing rig (502) further includes angularly placing the at least one first fluid-flow coupon (510) on a test plane (506) such that the plurality of holes (514) of the at least one first fluid-flow coupon (510) extends parallel to a normal (N1) to the test plane (506).

3. The method of claim 1 or 2, wherein the flow parameter is an effective flow area per hole of the at least one first fluid-flow coupon (510).

4. The method of any preceding claim, further comprising the steps of:
receiving a fluid flow requirement of a component (100);
manufacturing, via the laser additive manufacturing machine (300), a plurality of second fluid-flow coupons (518) at a same machine setting of the laser additive manufacturing machine (300), each second fluid-flow coupon (518) including a plate (520) defining a plurality of holes (522) extending therethrough and having a hole size (S3), wherein the hole sizes (S3) of the plurality of second fluid-flow coupons (518) are different from each other, and wherein each second fluid-flow coupon (518) is representative of the component (100);
disposing each second fluid-flow coupon (518) in the testing rig (502);
directing a fluid flow (F2) towards each second fluid-flow coupon (518);
measuring a fluid flow rate of the fluid flow (F2) through each second fluid-flow coupon (518);
comparing the fluid flow rate of each second fluid-flow coupon (518) with the fluid flow requirement of the component (100);
selecting one second fluid-flow coupon (518) from the plurality of second fluid-flow coupons (518) that has the fluid flow rate closest to the fluid flow requirement of the component (100); and
determining the hole size (S3) of the one second fluid-flow coupon (518) as a target hole size (S1) of the component (100).

5. The method of claim 4, further comprising manufacturing, via the laser additive manufacturing machine (300), the component (100) using the target hole size (S1) at the same machine setting.

6. The method of any one of claims 1 to 3, further comprising the steps of:
receiving a fluid flow requirement of a component (100);
manufacturing, via the laser additive manufacturing machine (300), a plurality of trial components (900) at a same machine setting of the laser additive manufacturing machine (300), each trial component (900) including a plate (902) defining a plurality of trial flow features (904) extending therethrough and having a feature size (S4), wherein the feature sizes (S4) of the plurality of trial components (900) are different from each other, and wherein a shape of each trial component (900) is same as a shape of the component (100);
disposing each trial component (900) in the testing rig (502);
directing a fluid flow (F3) towards each trial component (900);
measuring a fluid flow rate of the fluid flow (F3) through each trial component (900);
comparing the fluid flow rate of each trial component (900) with the fluid flow requirement of the component (100);
selecting one trial component (900) from the plurality of trial components (900) that has the fluid flow rate closest to the fluid flow requirement of the component (100); and
determining the feature size (S4) of the one trial component (900) as a target hole size (S1) of the component (100).

7. The method of claim 6, further comprising manufacturing, via the laser additive manufacturing machine (300), the component (100) using the target hole size (S1) at the same machine setting.

8. The method of any one of claims 1 to 7, further comprising the steps of:
manufacturing, via the laser additive manufacturing machine (300), a plurality of third fluid-flow coupons (1100) at a same machine setting of the laser additive manufacturing machine (300), each third fluid-flow coupon including a plate (1102) defining a plurality of holes (1104) extending therethrough and having a hole size (S5), wherein the hole sizes (S5) of the plurality of third fluid-flow coupons (1100) are equal to each other;
disposing each third fluid-flow coupon in the testing rig (502);
directing a fluid flow (F4) towards each third fluid-flow coupon (1100);
measuring a fluid flow rate of the fluid flow (F4) through each third fluid-flow coupon (1100); and
monitoring health of the laser additive manufacturing machine (300) based on a variation of the fluid flow rates through the plurality of third fluid-flow coupons (1100).

9. The method of any preceding claim, wherein the laser additive manufacturing machine (300) is a laser powder bed fusion machine.
